# EUROPÄISCHE PATENTSCHRIFT

(11) **EP 2 916 044 B1**
(45) Veröffentlichungstag und Bekanntmachung des Hinweises auf die Patenterteilung: **05.06.2019**
(21) Anmeldenummer: 14176295.5
(22) Anmeldetag: 09.07.2014
(51) Int. Cl.: F16H 37/04, F16H 3/66, F16H 3/00

(54) **Schaltgetriebeanordnung**
Gearbox assembly
Système d'engrenage

(30) Priorität: 27.09.2013 DE 102013110709
(43) Veröffentlichungstag der Anmeldung: 09.09.2015
(73) Patentinhaber: CLAAS Tractor S.A.S., 78141 Vélizy-Villacoublay Cedex (FR)
(72) Erfinder: Otten, Ulli, 67346 Speyer (DE)
(74) Vertreter: CLAAS Gruppe

(56) Entgegenhaltungen:
- DE-A1- 3 217 993
- DE-A1-102010 039 984
- DE-A1-102011 081 764
- DE-C1- 19 910 299
- GB-A- 2 069 635

## Beschreibung

Die Erfindung betrifft eine Schaltgetriebeanordnung für ein landwirtschaftliches Fahrzeug, insbesondere für einen Traktor, gemäß dem Oberbegriff des Anspruchs 1. Daneben betrifft die Erfindung ein landwirtschaftliches Fahrzeug gemäß Anspruch 17.

Seit langem kommen an landwirtschaftlichen Fahrzeugen, insbesondere an Zugmaschinen wie Traktoren, unter Last schaltbare Fahrgetriebe zum Einsatz, um den Vortrieb des Fahrzeugs auch unter hoher Zuglast, beispielsweise verursacht durch ein daran angebautes Arbeitsgerät wie ein Bodenbearbeitungsgerät (z.B. Pflug) oder dergleichen, über eine bloße Veränderung der Antriebsmotordrehzahl hinaus unterbrechungsfrei verändern zu können.

Lastschaltbare Fahrgetriebe für Traktoren weisen beispielsweise drei miteinander antriebsverbundene Planetenradsätze sowie diesen zugeordnete schaltbare Kupplungsanordnungen auf, die selektiv betätigbar sind, um das so gebildete Mehrstufengetriebe in verschiedene Lastschaltstufen unterschiedlicher Übersetzung schalten zu können. Bei jedem Wechsel einer Lastschaltstufe sind ein oder mehrere der Kupplungsanordnungen zu betätigen.

Aus der DE 199 10 299 C1 ist ein Planetenräder-Wechselgetriebe mit wenigstens sechs Vorwärtsgängen bekannt, bei dem eine Eingangswelle durch wenigstens eines von drei Planetenräder-Teilgetrieben mit einer Ausgangswelle in Antriebsverbindung bringbar ist, wobei dies durch eine Auftrennung einer Koppelverbindung des eingangsseitigen Teilgetriebes und Verwendung der anderen beiden Teilgetriebe (ausgangsseitiges Teilgetriebe und Umkehr-Teilgetriebe) als ein gemeinsames Koppelgetriebe zur Bildung der Übersetzung wenigstens eines zusätzlichen Vorwärtsganges erreicht wird.

Es ist eine bekannte Maßnahme, die Anzahl der Schaltstufen eines schaltbaren Getriebes zu erhöhen (vervielfachen), indem dieses mit einem weiteren Schaltgetriebe kombiniert wird. Lässt sich das weitere schaltbare Getriebe beispielsweise in zwei verschiedene Übersetzungen, im Folgenden Gruppenschaltstufen genannt, schalten, so wird mit der Getriebeanordnung (Kombination aus lastschaltbarem Mehrstufengetriebe und weiterem Schaltgetriebe) eine Verdoppelung der verfügbaren Übersetzungen gegenüber einem alleinigen Mehrstufengetriebe erzielt, indem zunächst in der niedrigen (ersten) Gruppenschaltstufe die ursprünglich verfügbaren Lastschaltstufen 1 bis n in Abfolge geschaltet werden und anschließend in der hohen (zweiten) Gruppenschaltstufe erneut die Lastschaltstufen 1 bis n in Abfolge geschaltet werden. Bei dem dabei erforderlichen sogenannten "Gruppenwechsel", d.h. einem Schaltvorgang, bei dem zur Erzielung einer nächstniedrigeren (oder nächsthöheren) Übersetzung gleichzeitig Gruppenschaltstufe und Lastschaltstufe zu wechseln ist, muss von der höchsten Lastschaltstufe n in die niedrigste Lastschaltstufe 1 geschaltet werden. Bei einem beispielsweise dreistufig aufgebauten Lastschaltgetriebe mit drei Planetenradsätzen müssen dazu konstruktionsbedingt verhältnismäßig viele Schaltvorgänge innerhalb des lastschaltbaren Mehrstufengetriebes durchgeführt werden. Im Fall eines in sieben Lastschaltstufen schaltbaren Mehrstufengetriebes muss beispielsweise bei einem Gruppenwechsel von der siebten Lastschaltstufe in eine erste Lastschaltstufe zurückgeschaltet werden. Dabei sind jedoch an zahlreichen, insbesondere an sämtlichen der drei Kupplungsanordnungen der Planetenradsätze Schaltvorgänge erforderlich, die gleichzeitig mit dem Gruppenwechsel durchgeführt werden müssen. Insgesamt müssten bei einem Gruppenwechsel dann also insgesamt vier Schaltvorgänge zeitgleich durchgeführt werden. Unter Berücksichtigung regelungstechnischer Aspekte ist ein derartiger Wechsel der Übersetzung aufgrund der Schwierigkeit der gleichzeitigen Koordinierung der Schaltvorgänge unter Last praktisch nicht unterbrechungsfrei zu verwirklichen. Eine Lastunterbrechung während eines Gruppenwechsels kann jedoch, beispielsweise bei sehr hoher Zuglast während eines Arbeitseinsatzes, einen Beschleunigungsvorgang des landwirtschaftlichen Fahrzeugs stark behindern oder sogar das Fahrzeug ganz zum Stillstand bringen. In jedem Fall stellt eine Lastunterbrechung eine deutliche Komforteinbuße für den Fahrer dar und ist bereits insofern als nachteilig anzusehen.

Es ist eine Aufgabe der vorliegenden Erfindung, eine Schaltgetriebeanordnung der genannten Art anzugeben, mit der sich Schaltvorgänge, die einen Gruppenwechsel beinhalten, auf verbesserte Weise durchführen lassen. Dabei wird insbesondere eine Vermeidung oder zumindest eine Reduzierung von Lastunterbrechungen angestrebt.

Die genannte Aufgabe wird gelöst durch eine Schaltgetriebeanordnung mit den Merkmalen des Anspruchs 1. Diese zeichnet sich dadurch aus, dass mit den Gruppenschaltstufen des Schaltgetriebes derartige Übersetzungen zwischen dem Ausgang der Schaltgetriebeanordnung und einer die Getriebe verbindenden Welle herstellbar sind, dass zum Einstellen einer nächsttieferen oder einer nächsthöheren Übersetzung der Schaltgetriebeanordnung im Mehrstufengetriebe höchstens zwei der Kupplungsanordnungen zu betätigen sind. Erfindungsgemäß wird dies insbesondere dadurch verwirklicht, dass die Gruppenschaltstufen in Bezug auf die Lastschaltstufen so abgestimmt sind, dass bei einem Gruppenwechsel, d.h. einem Schaltvorgang, bei dem zur Erzielung einer nächstniedrigeren (oder nächsthöheren) Übersetzung der Schaltgetriebeanordnung gleichzeitig eine Gruppenschaltstufe und eine Lastschaltstufe zu wechseln ist, ein Wechsel zumindest zwischen zwei extremen (höchste und niedrigste) Lastschaltstufen des Mehrstufengetriebes vermieden wird, da ein Wechsel zwischen den extremen Lastschaltstufen einen besonders hohen Schaltaufwand durch die Kupplungsanordnungen erfordert.

Dies lässt sich vorteilhaft dadurch realisieren, dass es sich bei dem Schaltgetriebe um ein Doppelkupplungsgetriebe handelt, das in insbesondere vier Gruppenschaltstufen unterschiedlicher Übersetzung schaltbar ist. Durch das Vorhandensein von vier Gruppenschaltstufen lässt sich nämlich auf vorteilhafte Weise eine Überdeckung von mit der Schaltgetriebeanordnung erzielbaren Übersetzungen verwirklichen. Infolge der Überdeckung ist es möglich, bei einem Gruppenwechsel auf das Schalten zwischen zwei extremen Lastschaltstufen (höchste und niedrigste) zu verzichten, um in ein nächsthöhere oder nächstniedrigere Übersetzung zu gelangen. Aufgrund von vier nutzbaren Gruppengangstufen mit unterschiedlichem Übersetzungsverhältnis wird trotz Nichtnutzung theoretisch mit der Schaltgetriebeanordnung kombinierbarer Übersetzungen dennoch eine ausreichende Getriebespreizung erzielt. Vorteilhaft ermöglicht das Doppelkupplungsgetriebe dabei auch ein Schalten unter Last, so dass die Schaltgetriebeanordnung insgesamt lastschaltfähig ist.

Ein konstruktiv vorteilhafter Aufbau ergibt sich, indem das Doppelkupplungsgetriebe ein erstes Teilgetriebe, dem eine erste Getriebewelle zugeordnet ist, und ein zweites Teilgetriebe aufweist, dem eine von der ersten Getriebewelle beabstandete zweite Getriebewelle zugeordnet ist, wobei jede der Getriebewellen mit einer gemeinsamen Abtriebswelle in Antriebsverbindung bringbar ist und wobei jede der Getriebewellen durch Schließen einer dem jeweiligen Teilgetriebe zugeordneten Reibkupplung mit einer Eingangswelle des Doppelkupplungsgetriebes in Antriebsverbindung bringbar ist.

Vorteilhaft ist dabei die erste Getriebewelle mittels der dem ersten Teilgetriebe zugeordneten Reibkupplung mit einer ersten Antriebswelle kuppelbar und ist die zweite Getriebewelle mittels der dem zweiten Teilgetriebe zugeordneten Reibkupplung mit einer zweiten Antriebswelle kuppelbar, wobei die erste und die zweite Antriebswelle Teil eines von der Eingangswelle des Doppelkupplungsgetriebes antreibbaren Zwischengetriebes sind. Bei dem Zwischengetriebe handelt es sich vorzugsweise um ein Stirnradgetriebe, das eine erste Welle, insbesondere die erste Antriebswelle, und eine dazu parallele zweite Welle, insbesondere die zweite Antriebswelle, bei vorzugsweise gleichem Drehsinn der Wellen in ein festes Drehzahlverhältnis zueinander setzt, das bevorzugt ungleich 1 ist.

Eine vorteilhafte Weiterbildung sieht vor, dass der ersten und der zweiten Getriebewelle jeweils insbesondere zwei Zahnräder zugeordnet sind, die jeweils mit einem der Abtriebswelle zugeordneten Zahnrad kämmen, so dass zwischen der Abtriebswelle und der jeweiligen Getriebewelle jeweils zumindest ein festes Drehzahlverhältnis ist, bzw. jeweils insbesondere zwei feste Drehzahlverhältnisse herstellbar sind.

Bevorzugt ist die Eingangswelle des Doppelkupplungsgetriebes mit der gemeinsamen Abtriebswelle über jedes der beiden Teilgetriebe über jeweils zwei schaltbare Gruppenschaltstufen in Antriebsverbindung bringbar, so dass das Doppelkupplungsgetriebe in insgesamt vier Gruppenschaltstufen schaltbar ist.

Das Doppelkupplungsgetriebe lässt sich vorteilhaft unter Last schalten, indem während des Öffnens der Reibkupplung eines Teilgetriebes die jeweils dem anderen Teilgetriebe zugeordnete Reibkupplung geschlossen wird, so dass eine über eines der Teilgetriebe bestehende Antriebsverbindung zwischen Eingangswelle des Doppelkupplungsgetriebes und Abtriebswelle durch eine über das jeweils andere Teilgetriebe herzustellende Antriebsverbindung ersetzbar ist, ohne eine Antriebsverbindung zwischen Eingangswelle des Doppelkupplungsgetriebes und Abtriebswelle zu unterbrechen. Zur Vorwahl einer Gruppenschaltstufe ist das betreffende Zahnrad vorzugsweise durch Stellmittel drehfest mit der jeweiligen Getriebewelle verbindbar.

Eine vorteilhafte Weiterbildung der Schaltgetriebeanordnung sieht vor, dass diese weiterhin eine Wellendurchführung für einen Zapfwellenantrieb des landwirtschaftlichen Fahrzeugs aufweist. Dazu sind insbesondere eine Eingangswelle des Mehrstufengetriebes und eine Eingangswelle des Schaltgetriebes als Hohlwelle ausgeführt und nehmen eine Welle zum Antrieb eines Zapfwellengetriebes in sich auf. Zweckmäßigerweise weisen auch die Planetenradsätze des Mehrstufengetriebes einen zentralen Durchgang für die Welle auf.

Bei der Gestaltung der Schaltgetriebeanordnung spielt auch die Anpassbarkeit an eine vorgegebene Einbauumgebung eine Rolle. Demnach zeichnet sich die Schaltgetriebeanordnung vorzugsweise weiterhin aus durch ein zumindest das Schaltgetriebe aufnehmendes Getriebegehäuse, in dem sich die Welle zum Antrieb des Zapfwellengetriebes, die insbesondere koaxial zur Eingangswelle des Schaltgetriebes, insbesondere des Doppelkupplungsgetriebes, angeordnet ist, mit zumindest zwei unterschiedlichen Achsabstandsmaßen (sogenannter "drop") gegenüber der Abtriebswelle der Schaltgetriebeanordnung anordnen lässt. Dabei bleiben insbesondere ein Achsabstand jeder der Getriebewellen des Doppelkupplungsgetriebe gegenüber der Welle für den Zapfwellenantrieb, und ein Achsabstand jeder der Getriebewellen gegenüber der Abtriebswelle der Schaltgetriebeanordnung jeweils unverändert.

Vorteilhaft ist der Schaltgetriebeanordnung weiterhin eine durch eine Kupplungsanordnung betätigbare Reversiereinrichtung zugeordnet, mit der sich eine Drehrichtung zumindest des Abtriebs der Schaltgetriebeanordnung umkehren lässt.

Eine besonders vorteilhafte Ausgestaltung ergibt sich, indem die Reversiereinrichtung in Planetenbauweise ausgeführt und koaxial zu einer Eingangswelle der Getriebeanordnung, insbesondere eingangsseitig des Mehrstufengetriebes angeordnet ist. Durch die Planetenbauweise wird eine besonders kurze axiale Baulänge erzielt, was sich vorteilhaft auch auf die Baulänge der Schaltgetriebeanordnung insgesamt auswirkt.

Bevorzugt ist bei einem Schaltvorgang in eine nächsttiefere bzw. nächsthöhere Übersetzung der Schaltgetriebeanordnung, der einen Wechsel zwischen der ersten Gruppenschaltstufe und der zweiten Gruppenschaltstufe und/oder einen Wechsel zwischen der dritten Gruppenschaltstufe und der vierten Gruppenschaltstufe erfordert, im Mehrstufengetriebe lediglich eine einzige der Kupplungsanordnungen zu betätigen.

Es kann vorteilhaft vorgesehen sein, dass ausschließlich bei einem Schaltvorgang in eine nächsttiefere bzw. nächsthöhere Übersetzung der Schaltgetriebeanordnung, der einen Wechsel zwischen der zweiten Gruppenschaltstufe und der dritten Gruppenschaltstufe erfordert, im Mehrstufengetriebe zwei der Kupplungsanordnungen zu betätigen sind.

Zur Erzielung eines hohen Fahrkomforts ist es vorteilhaft, dass die Lastschaltstufen des Mehrstufengetriebes und die Gruppenschaltstufen des Schaltgetriebes so abgestimmt sind, dass bei einem Schaltvorgang in eine nächsttiefere bzw. nächsthöhere Übersetzung der Schaltgetriebeanordnung eine Drehzahl am Abtrieb der Schaltgetriebeanordnung um einen annähernd gleichbleibenden Faktor ansteigt bzw. abfällt.

Die Erfindung betrifft weiterhin ein landwirtschaftliches Fahrzeug, insbesondere einen Traktor, mit einem Antriebsmotor und einer wie zuvor beschriebenen Schaltgetriebeanordnung. Dabei ist die Schaltgetriebeanordnung vom Antriebsmotor antreibbar und steht mit zumindest einer Fahrachse des Fahrzeugs in Antriebsverbindung und/oder ist mit einer ggf. weiteren Fahrachse des Fahrzeugs in Antriebsverbindung bringbar.

Die Erfindung wird nachfolgend anhand eines bevorzugten Ausführungsbeispiels erläutert, woraus sich weitere vorteilhafte Wirkungen und Effekte der Erfindung ergeben. Dazu sei auf die beigefügte Zeichnung verwiesen. Darin zeigt:
- Fig. 1: eine schematische Ansicht einer erfindungsgemäßen Schaltgetriebeanordnung gemäß einem bevorzugten Ausführungsbeispiel,
- Fig. 2: eine Schaltlogik für das Mehrstufengetriebe der Schaltgetriebeanordnung,
- Fig. 3: eine Übersicht über mit der Schaltgetriebeanordnung genutzte Übersetzungen,
- Fig. 4a: eine schematische Querschnittsansicht des Schaltgetriebes der Schaltgetriebeanordnung bei großen Achsabstand,
- Fig. 4b: eine schematische Querschnittsansicht des Schaltgetriebes der Schaltgetriebeanordnung bei kleinem Achsabstand,
- Fig. 5: eine vereinfachte Seitenansicht des Schaltgetriebes der Schaltgetriebeanordnung und des Zapfwellenantriebs bei großem Achsabstand,
- Fig. 6: eine vereinfachte Seitenansicht des Schaltgetriebes der Schaltgetriebeanordnung und des Zapfwellenantriebs bei kleinem Achsabstand,
- Fig. 7: eine vereinfachte Darstellung eines Ausschnitts eines Traktors mit eingebauter Schaltgetriebeanordnung in Seitenansicht.

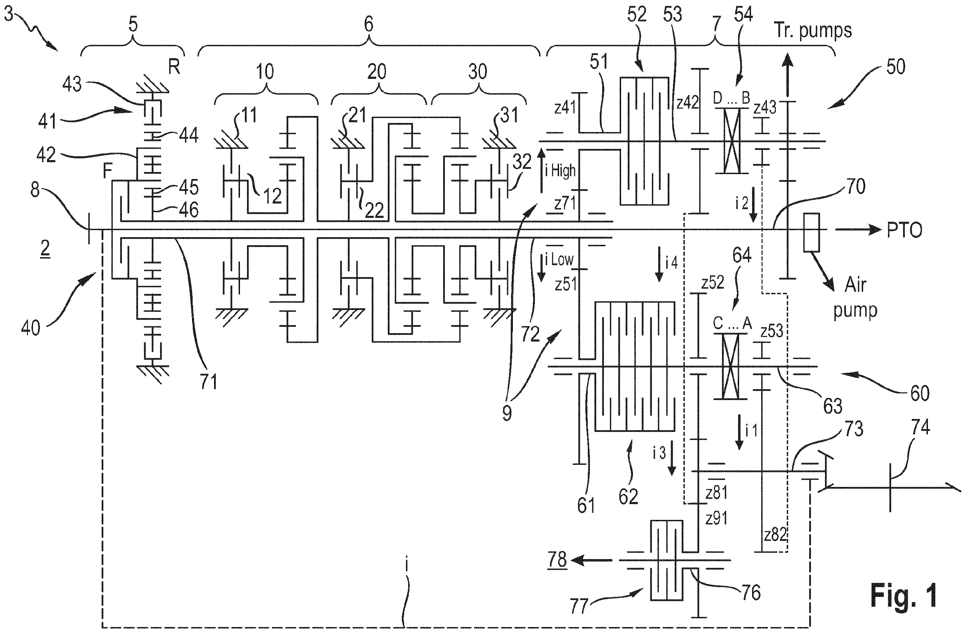

Fig. 1 zeigt eine schematische Ansicht einer Schaltgetriebeanordnung 3 gemäß einem bevorzugten Ausführungsbeispiel der Erfindung. Die Schaltgetriebeanordnung 3 kommt vorzugsweise zum Einsatz als Fahrgetriebe an einem landwirtschaftlichen Fahrzeug wie einem Traktor. Mit der gezeigten Schaltgetriebeanordnung 3 lässt sich Antriebsleistung, die insbesondere von einem Antriebsmotor 2, beispielsweise einem Dieselmotor, bereitgestellt wird, mit unterschiedlichen Übersetzungen i auf eine Abtriebswelle 73 der Schaltgetriebeanordnung 3 übertragen. Eine mit der Abtriebswelle 73 in Antriebsverbindung stehende Hinterachse 74, welche eine Drehung der Hinterachse 74 (über damit verbundene Räder) in einen Vorschub des Traktors wandelt, wird daher abhängig von einer in der Schaltgetriebeanordnung 3 gewählten Übersetzung i mit unterschiedlicher Drehzahl angetrieben. Folglich ist ein mit der Schaltgetriebeanordnung 3 ausgestatteter Traktor abhängig von der in der Schaltgetriebeanordnung 3 gewählten Übersetzung i in unterschiedlichen Geschwindigkeitsbereichen (Fahrstufen) bewegbar.

Die Abtriebswelle 73 der Schaltgetriebeanordnung 3 ist im gezeigten Ausführungsbeispiel daneben über eine Stirnradstufe mit einer Vorderachse 78 des Traktors in Antriebsverbindung bringbar. Dazu ist auf der Abtriebswelle 73 der Schaltgetriebeanordnung 3 ein Zahnrad z81 angeordnet, das mit einem auf einer Hohlwelle 76 angeordneten Zahnrad z91 kämmt. Der Hohlwelle 77 ist eine Allradkupplung 77 zugeordnet, die im geschlossenen Zustand eine Antriebsverbindung zwischen der Hohlwelle 77 und der Vorderachse 78 herstellt. Abhängig vom Schaltzustand der Allradkupplung 77 lässt mit der gezeigten Schaltgetriebeanordnung 3 somit entweder ausschließlich die Hinterachse 74 antreiben (Allradkupplung 77 geöffnet) oder lassen sich Hinterachse 74 und die Vorderachse 78 gemeinsam antreiben (Allradkupplung 77 geschlossen).

Die Schaltgetriebeanordnung 3 umfasst im Wesentlichen drei Funktionsgruppen, die jeweils über Wellen miteinander in Antriebsverbindung stehen. Eingangsseitig der Schaltgetriebeanordnung 3, d.h. unmittelbar von einem Antriebsmotor 2 antreibbar, ist ein Power Reverser 5 (Reversiereinrichtung) angeordnet. Dieser steht über eine Hohlwelle 71 mit einem Mehrstufengetriebe 6 in Antriebsverbindung, das in sieben Lastschaltstufen L_{1..7} schaltbar ist. Das Mehrstufengetriebe 6 steht über eine Hohlwelle 72 mit einem Doppelkupplungsgetriebe 7 in Antriebsverbindung, das in vier Gruppenschaltstufen G_{A..D} schaltbar ist. Das Doppelkupplungsgetriebe 7 weist ausgangsseitig eine Abtriebswelle 73 auf, die zugleich Abtriebswelle 73 der Schaltgetriebeanordnung 3 ist.

Folglich lassen sich mit der Schaltgetriebeanordnung 3 in Abhängigkeit einer im Mehrstufengetriebe 6 gewählten Lastschaltstufe L_{1..7} und einer im Doppelkupplungsgetriebe 7 gewählten Gruppenschaltstufe G_{A..D} zwischen dem Getriebeeingang (Motorabtriebswelle 8) und der Abtriebswelle 73 eine Anzahl von Übersetzungen i einstellen, die zunächst jeweils einer (Vorwärts-) Fahrstufe des Traktors entsprechen. Weiterhin lässt sich mittels des Power Reversers 5 eine Drehrichtungsumkehr erzielen, so dass sich die Drehrichtung der Abtriebswelle 73 der Schaltgetriebeanordnung 3 umkehren lässt. Bei umgekehrter Drehrichtung lässt sich mit der Schaltgetriebeanordnung 3 eine Anzahl Übersetzungen i mit entgegengesetzter Richtung einstellen, die jeweils Rückwärtsfahrstufen des Traktors entsprechen.

Die zum Einsatz kommenden einzelnen Funktionsgruppen 5, 6, 7 der Schaltgetriebeanordnung 3 seien nachfolgend im Einzelnen erläutert:
Der Power Reverser 5 ist in Planetenbauweise ausgeführt und koaxial zur Eingangswelle der Schaltgetriebeanordnung 3 (Motorabtriebswelle 8) angeordnet. Der Power Reverser 5 weist einen von der Motorabtriebswelle 8 angetriebenen Planetenträger 42 auf, der eine Anordnung von miteinander kämmenden Planetenrädern 44, 45 lagert. Dabei rollen innere Planetenräder 45 an einem zentralen Sonnenrad 46 ab, das an einer Hohlwelle 71 angeordnet ist. Äußere Planetenräder 44 rollen an einem innenverzahnten Außenring 43 ab. Der Außenring 43 ist über eine Bremse 41 von einem frei drehbaren Zustand in einen festen Zustand bremsbar. Der Planetenträger 42 ist über eine Kupplung 40 mit der Hohlwelle 71 in Antriebsverbindung bringbar. Die Kupplung 40 und die Bremse 41 lassen sich miteinander gekoppelt betätigen, um den Power Reverser 5 von einem Gleichlaufzustand in einen Reversierzustand - und umgekehrt - zu bringen. Ist die Kupplung 40 geschlossen und die Bremse 41 geöffnet, so besteht eine direkte Antriebsverbindung zwischen der Motorabtriebswelle 8 und der damit gekuppelten Hohlwelle 71, so dass sich Motorabtriebswelle 8 und Hohlwelle 71 gleichsinnig und mit gleicher Drehzahl drehen (Vorwärtsfahrt). Wird dagegen die Kupplung 40 geöffnet und die Bremse 41 geschlossen, so findet über das Abrollen der äußeren Planetenräder 44 am festgebremsten Außenring 43 und die mit den äußeren Planetenräder 44 kämmenden inneren Planetenräder 45 eine Drehrichtungsumkehr am Sonnenrad 46 der Hohlwelle 71 statt. Folglich dreht sich die Hohlwelle 71 gegensinnig zur Motorabtriebswelle 8. Abhängig von den jeweiligen Zahnpaarungen des Planetensatzes kann sich dabei die Drehzahl der Hohlwelle 71 von der Drehzahl der Motorabtriebswelle 8 betragsmäßig unterscheiden. Der Power Reverser 5 weist aufgrund der beschriebenen Planetenbauweise eine verhältnismäßig geringe axiale Baulänge auf. Dies wirkt sich auch auf die axiale Baulänge der Schaltgetriebeanordnung 3 insgesamt vorteilhaft aus.

Das Mehrstufengetriebe 6 weist im Wesentlichen drei Planetenradsätze 10, 20, 30 auf, die miteinander antriebsverbunden sind, um ein dreistufiges Getriebe zu bilden. Das Mehrstufengetriebe 6 steht eingangsseitig mit der Hohlwelle 71 in Antriebsverbindung. Abtriebsseitig steht das Mehrstufengetriebe 6 mit der Hohlwelle 72 in Antriebsverbindung. Jedem der drei Planetenradsätze 10, 20, 30, deren für sich gesehen bekannter Aufbau hier nicht näher erläutert zu werden braucht, ist eine Kupplungsanordnung zugeordnet, umfassend jeweils eine Bremse und eine Kupplung. So ist dem ersten Planetenradsatz 10 eine Bremse 11 und eine Kupplung 12 zugeordnet. Die Bremse 11 und die Kupplung 12 lassen sich im Rahmen eines Schaltvorgangs gekoppelt betätigen (Schaltvorgang), wodurch sich eine Übersetzung der Getriebestufe des Planetenradsatzes 10 zwischen zwei Zuständen, einer höheren und einer damit verglichen niedrigeren Übersetzung, verändern lässt. Im Rahmen eines solchen Schaltvorgangs wird entweder zugleich die Bremse 11 geschlossen und die Kupplung 12 geöffnet oder wird zugleich die Bremse 11 geöffnet und die Kupplung 12 geschlossen. Aufgrund der zeitgleichen Betätigung von jeweils Kupplung 12 und Bremse 11 im Rahmen eines Schaltvorgangs kann der Wechsel in eine andere Übersetzung auch unter Last erfolgen.

Auf vergleichbare Weise und mit vergleichbarer Funktion und Wirkung sind dem zweiten Planetenradsatz 20 eine Bremse 21 und eine Kupplung 22 zugeordnet, und sind dem dritten Planetenradsatz 30 eine Bremse 31 und eine Kupplung 32 zugeordnet.

Durch die dreistufige Anordnung der schaltbaren Planetenradsätze 10, 20, 30 lässt sich das Mehrstufengetriebe 6 des Ausführungsbeispiels in bevorzugt sieben Lastschaltstufen L_{1..7} schalten. Die drei Kupplungsanordnungen bestehend aus den Paarungen: Bremse 11 - Kupplung 12, Bremse 21 - Kupplung 22, und Bremse 31 - Kupplung 32 werden dazu selektiv betätigt.

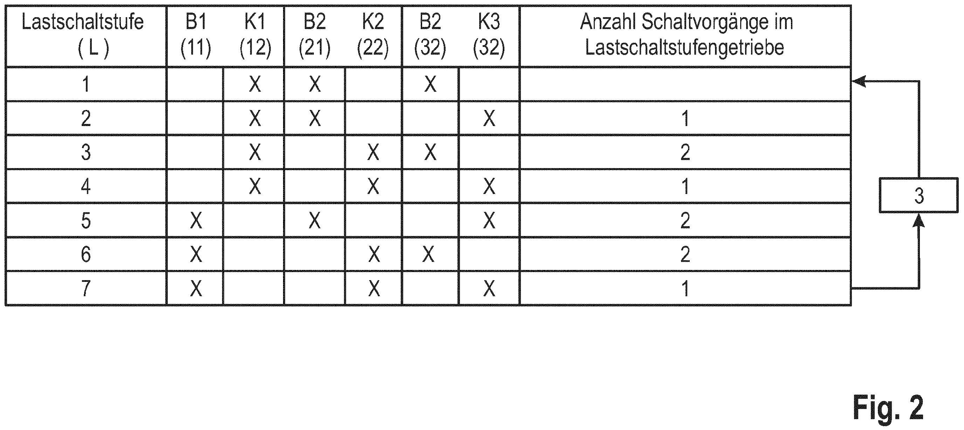

Eine tabellarische Übersicht über die dabei zugrundeliegende Kombinatorik ist in Fig. 2 gegeben, welche die Schaltlogik des Mehrstufengetriebe 6 zeigt. Demnach sind mit dem Mehrstufengetriebe 6 abhängig vom Schaltzustand der drei Kupplungsanordnungen - jeweils gebildet aus einer Paarung 11, 12; 21, 22; 31, 32 von Bremse und Kupplung - sieben Lastschaltstufen L_{1..7} schaltbar. Die rechte Spalte der Tabelle zeigt, wie viele Schaltvorgänge (bezogen auf eine Kupplungsanordnung) jeweils erforderlich sind, um von einer Lastschaltstufe Lₙ in eine nächsthöhere Lastschaltstufe Lₙ₊₁ zu gelangen. Die Anzahl der dabei erforderlichen Schaltvorgänge beträgt demnach maximal 2.

Wie weiterhin der Tabelle zu entnehmen, wären jedoch - bei einem wie hier verwendeten Mehrstufengetriebe 6 mit sieben Lastschaltstufen L_{1..7} - insgesamt 3 Schaltvorgänge, d.h. an jeder der drei Kupplungsanordnungen ein Schaltvorgang, erforderlich, um von der siebten Lastschaltstufe L₇ zurück in die erste Lastschaltstufe L₁ zu gelangen. Die gleichzeitige Durchführung von drei Schaltvorgängen lässt sich unter Last jedoch nicht zufriedenstellend durchführen.

Die Schaltgetriebeanordnung 3 gemäß dem bevorzugten Ausführungsbeispiels der Erfindung weist daher ein Schaltgetriebe 7 auf, das in Doppelkupplungsbauweise ausgeführt ist und das in vier Gruppenschaltstufen G_{A..D} unterschiedlicher Übersetzung i_{A..D} schaltbar ist. Mit den Gruppenschaltstufen Gₙ des Schaltgetriebes (Doppelkupplungsgetriebes) 7 sind derartige Übersetzungen i_{A..D} zwischen dem Ausgang 73 der Schaltgetriebeanordnung 3 und einer das Mehrstufengetriebe 6 mit dem Doppelkupplungsgetriebe 7 verbindenden Welle 72 herstellbar, dass zum Einstellen einer nächsttieferen oder einer nächsthöheren Übersetzung i der Schaltgetriebeanordnung 3 im Mehrstufengetriebe 6 höchstens zwei der Kupplungsanordnungen 11, 12; 21, 22; 31, 32 zu betätigen sind.

Dem Doppelkupplungsgetriebe 7 ist eingangsseitig die Hohlwelle 72 zugeordnet und ist abtriebsseitig die Abtriebswelle 73 zugeordnet. Das Doppelkupplungsgetriebe 7 umfasst im Wesentlichen ein erstes Teilgetriebe 50, dem eine erste Getriebewelle 53 zugeordnet ist, und ein zweites Teilgetriebe 60, dem eine von der ersten Getriebewelle 53 beabstandete zweite Getriebewelle 63 zugeordnet ist. Jede der Getriebewellen 53, 63 ist mit der gemeinsamen Abtriebswelle 73 in Antriebsverbindung bringbar und jede der Getriebewellen 53, 63 ist durch Schließen einer dem jeweiligen Teilgetriebe 50, 60 zugeordneten Reibkupplung 52, 62 mit der Hohlwelle 72 des Doppelkupplungsgetriebes 7 in Antriebsverbindung bringbar. Dazu ist an der Hohlwelle 72 ein Zahnrad z71 angeordnet, das zugleich in kämmendem Eingriff mit einem Zahnrad z41 und einem Zahnrad z51 steht. Die Zahnräder z41 und z51 werden demnach vom Zahnrad z71 in gleichem Drehsinn angetrieben. Aufgrund unterschiedlichen Durchmessers dreht sich dabei jedoch, wie angedeutet, das Zahnrad z41 mit einer höheren Geschwindigkeit (i_{High}) als das Zahnrad z51 (i_{Low}).

Das Zahnrad z41 ist an einer ersten Antriebswelle 51 angeordnet, die koaxial zur ersten Getriebewelle 53 angeordnet ist. Eine als Lamellenkupplung ausgeführte Reibkupplung 52 ist schaltbar zwischen einem geöffneten Zustand, in dem die Antriebswelle 51 von der ersten Getriebewelle 53 antriebsmäßig gelöst ist, und einem geschlossenen Zustand, in dem die Antriebswelle 51 mit der ersten Getriebewelle 53 in Antriebsverbindung steht.

Das Zahnrad z51 ist an einer zweiten Antriebswelle 61 angeordnet, die koaxial zur zweiten Getriebewelle 63 angeordnet ist. Eine als Lamellenkupplung ausgeführte Reibkupplung 62 ist schaltbar zwischen einem geöffneten Zustand, in dem die Antriebswelle 61 von der zweiten Getriebewelle 63 antriebsmäßig gelöst ist, und einem geschlossenen Zustand, in dem die Antriebswelle 61 mit der zweiten Getriebewelle 63 in Antriebsverbindung steht. Wie der Darstellung zu entnehmen, ist die Reibkupplung 62 des zweiten Teilgetriebes 60 stärker ausgelegt als die Reibkupplung 52 des ersten Teilgetriebes 50.

Der ersten und der zweiten Getriebewelle 53, 63 sind jeweils zwei Zahnräder z42, z43 bzw. z52, z53 zugeordnet. Diese kämmen jeweils mit einem der Abtriebswelle 73 zugeordneten Zahnrad z81, z82. Dabei sind die Zahnräder z42, z43 bzw. z52, z53 jeweils lose auf den Getriebewellen 53, 63 angeordnet und über Stellmittel 54 bzw. 64 (Schaltmuffen) an der jeweiligen Getriebewelle 53, 63 feststellbar, so dass abhängig vom Schaltzustand der Stellmittel 54 bzw. 64 zwischen der Abtriebswelle 73 und der jeweiligen Getriebewelle 53; 63 jeweils ein festes Drehzahlverhältnis herstellbar ist.

Abhängig vom Schaltzustand der Reibkupplungen 52 und 62 sowie vom Schaltzustand der Stellmittel 54 und 64 ist die Eingangswelle 72 des Doppelkupplungsgetriebes 7 mit der gemeinsamen Abtriebswelle 73 über jedes der beiden Teilgetriebe 50, 60 über jeweils zwei schaltbare Gruppenschaltstufen G_{B, D}; G_{A, C} in Antriebsverbindung bringbar, so dass das Doppelkupplungsgetriebe 7 in insgesamt vier Gruppenschaltstufen G_{A, B, C, D} schaltbar ist.

Dabei lässt sich das Doppelkupplungsgetriebe 7 unter Last schalten, indem während des Öffnens der Reibkupplung 52; 62 eines Teilgetriebes 50; 60 die jeweils dem anderen Teilgetriebe 60; 50 zugeordnete Reibkupplung 62; 52 geschlossen wird, so dass eine über eines der Teilgetriebe 50; 60 bestehende Antriebsverbindung zwischen Eingangswelle 72 und Abtriebswelle 73 durch eine über das jeweils andere Teilgetriebe 60; 50 herzustellende Antriebsverbindung ersetzbar ist, ohne eine Antriebsverbindung zwischen Eingangswelle 72 und Abtriebswelle 73 zu unterbrechen. Zur Vorwahl einer gewünschten Gruppenschaltstufe Gₙ wird das betreffende Zahnrad z42, z43; z52, z53 zuvor durch Stellmittel 54, 64 drehfest mit der jeweiligen Getriebewelle 53; 63 verbunden.

Die vier Gruppenschaltstufen G_{A..D} des Doppelkupplungsgetriebes 7 weisen vier sich voneinander unterscheidende Übersetzungen i_{A...D} auf und sind mit Bezug auf die sieben Lastschaltstufen L_{1..7} des Mehrstufengetriebes 6 so gewählt, dass sich mit der Schaltgetriebeanordnung 3 eine Anzahl von 20 verschiedenen Übersetzungen i einstellen lässt.

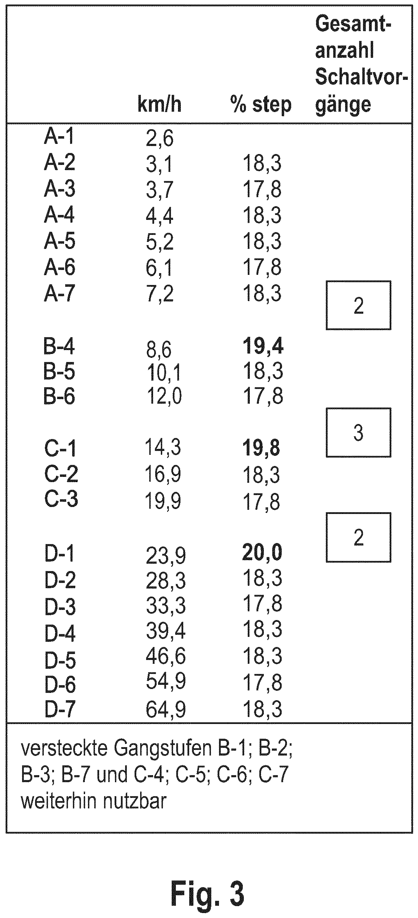

Fig. 3 zeigt in einer tabellarischen Übersicht, auf welche Weise, d.h. durch welche Kombination von Lastschaltstufen L_{1..7} und Gruppenschaltstufen G_{A..D} die 20 verschiedenen Übersetzungen i der Schaltgetriebeanordnung 3 erzeugt werden können. Dabei ist einer ersten (linken) Spalte die Bezeichnung der jeweiligen Übersetzung angegeben (beispielsweise A-1 oder C-3). Dabei steht der vorangestellte Buchstabe der Bezeichnung für die gewählte Gruppenschaltstufe und die folgende Ziffer für die gewählte Lastschaltstufe. Entsprechend wird beispielsweise eine höchste Übersetzung i_{A-1} durch die Wahl von Gruppenschaltstufe A und Lastschaltstufe 1 hergestellt.

Der Tabelle ist aus der mit "% step" bezeichneten Spalte weiterhin zu entnehmen, dass die dargestellten Übersetzungen (Fahrstufen) so aufeinanderfolgen, dass bei einem Schaltvorgang in eine nächsttiefere (bzw. in eine nächsthöhere) Übersetzung i der Schaltgetriebeanordnung 3 die Abtriebsdrehzahl (und damit korrespondieren die Fahrgeschwindigkeit) jeweils um einen annähernd gleichen Faktor zunimmt. Im bevorzugten Ausführungsbeispiel liegt dieser Faktor zwischen 17,8 % und 20 %.

Bei einer Schaltgetriebeanordnung, die ein lastschaltbares Mehrstufengetriebe mit einem gruppenschaltfähigen Getriebe kombiniert, besteht üblicherweise das Problem, dass bei einem sogenannten Gruppenwechsel, d.h. einem Schaltvorgang, bei dem zur Erzielung einer nächsthöheren oder nächstniedrigeren Übersetzung gleichzeitig eine Gruppenschaltstufe und eine Lastschaltstufe zu wechseln ist, im lastschaltfähigen Mehrstufengetriebe zwischen zwei extremen Lastschaltstufen geschaltet werden muss. Im Fall eines beispielsweise in sieben Lastschaltstufen schaltbaren Mehrstufengetriebes müsste demnach bei einem Schaltvorgang von der Übersetzung A-7 nach B-1 von einer Lastschaltstufe L₇ in eine Lastschaltstufe L₁ geschaltet werden. Wie bereits zuvor anhand von Fig. 2 erläutert, sind dabei jedoch an jeder der drei Kupplungsanordnungen der Planetenradsätze Schaltvorgänge erforderlich. Gleichzeitig ist ein Schaltvorgang im gruppenschaltfähigen Getriebe erforderlich, so dass insgesamt vier Schaltvorgänge erforderlich wären, um von A-7 nach B-1 zu schalten.

Die erfindungsgemäße Schaltgetriebeanordnung behebt dieses Problem dadurch, dass die Übersetzungen i_{A..D} des Doppelkupplungsgetriebes 7 in Bezug auf die Lastschaltstufen L_{1..7} so abgestimmt sind, dass bei einem Wechsel der Gruppenschaltstufe G nicht mehr zwischen den zwei extremen Lastschaltstufen L₇ und L₁ geschaltet wird, um eine nächsttiefere (bzw. nächsthöhere) Übersetzung i zu erzielen. Stattdessen wird, wie in Fig. 3 dargestellt, beispielsweise von der Übersetzung i_{A-7} in die Übersetzung i_{B-4} geschaltet, um eine nächsttiefere Übersetzungsstufe der Schaltgetriebeanordnung 3 zu erzielen. Auf vergleichbare Weise wird von der Übersetzung i_{B-6} in die Übersetzung i_{C-1} geschaltet, und wird von der Übersetzung i_{C-3} in die Übersetzung i_{D-1} geschaltet, um jeweils eine nächsttiefere Übersetzung i der Schaltgetriebeanordnung 3 zu erzielen. Es ergibt sich der vorteilhafte Effekt, dass für einen Gruppenwechsel eine reduzierte Anzahl an Schaltvorgängen (durchzuführen von den Kupplungsanordnungen) innerhalb des Mehrstufengetriebes 6 erforderlich ist. So ist beim Gruppenübergang A-B bzw. beim Gruppenübergang C-D jeweils nur noch ein Schaltvorgang im Mehrstufengetriebes 6 nötig. Beim Übergang B-C sind zwei Schaltvorgänge im Mehrstufengetriebes 6 erforderlich. In Fig. 3 ist in der rechten Spalte die Gesamtanzahl erforderlicher Schaltvorgänge angegeben, die demgegenüber um den Wert 1 erhöht ist, weil auch der im Doppelkupplungsgetriebe 7 stattfindende Schaltvorgang (Wechsel der Gruppenschaltstufe G) mitgerechnet wird.

Fig. 3 ist schließlich zu entnehmen, dass die Schaltgetriebeanordnung 3 aufgrund der beschriebenen Funktionsweise, welche zur Verringerung von Schaltvorgängen bei einem Gruppenwechsel dient, auch versteckte Gangstufen aufweist (B-1, B-2, B-3, B-7, C-4, C-5, C-6, C-7). Diese tragen nicht zu einer Vergrößerung der Getriebespreizung bei und werden im normalen Betrieb nicht genutzt. Ein Nutzung in besonderen Fällen ist jedoch denkbar.

Aus Fig. 1 ist zu entnehmen, dass die Schaltgetriebeanordnung 3 neben der Übertragung von Antriebsleistung an die Abtriebswelle 73 zum Zweck des Fahrantriebs auch zur Übertragung von Antriebsleistung für einen Zapfwellenantrieb dient. So weist die Getriebeanordnung 3 eine Wellendurchführung für einen Zapfwellenantrieb (in Fig. 1 mit "PTO" für "Power-take-off" angedeutet) auf. Dazu sind die Wellen 71 und 72 als Hohlwellen ausgeführt und sind die Planetenradsätze 10, 20, 30 hohl ausgeführt, um eine von der Motorabtriebswelle 8 durch die Schaltgetriebeanordnung 3 verlaufende Welle 70, die zum Antrieb eines Zapfwellengetriebes 75 (in Fig. 1 nicht gezeigt) dient, in sich aufzunehmen. Auf diese Weise ist eine direkte und damit besonders energieeffiziente Antriebsleistungsübertragung vom Antriebsmotor 2 zu einem Zapfwellenabtrieb des Traktors möglich.

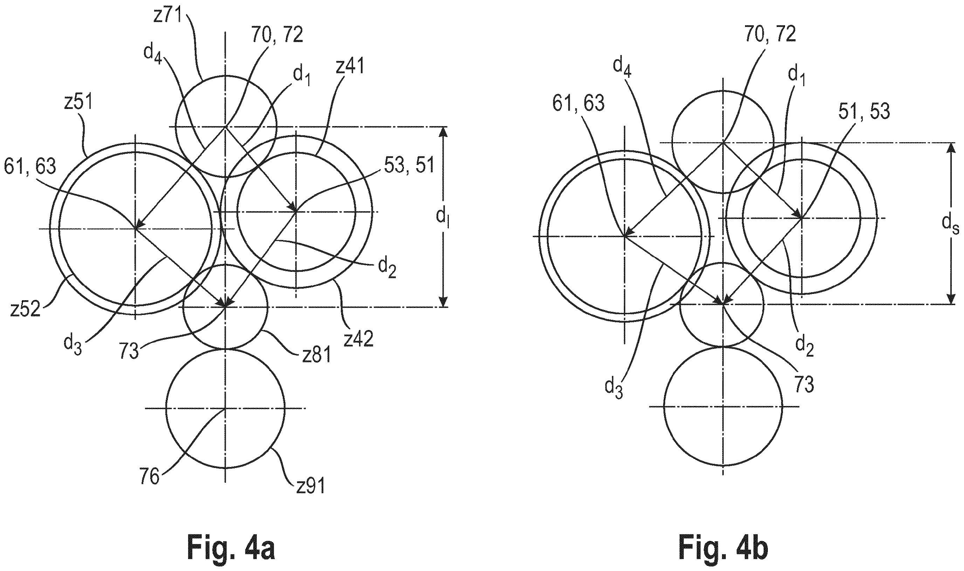

Wie anhand der nachfolgenden Figuren 4a, 4b sowie 5 und 6 zu erläutern, bietet die Schaltgetriebeanordnung 3 weiterhin einen Vorteil hinsichtlich der Anpassbarkeit an vorgegebene Umgebungsbedingungen. Denn insbesondere das Doppelkupplungsgetriebe 7 als Teil der Schaltgetriebeanordnung 3 ermöglicht ein flexiblen Achsabstand d zwischen der Welle 70 und der Abtriebswelle 73, ohne dass die übrige Funktionalität der Schaltgetriebeanordnung 3 dadurch beeinträchtigt wird. Hierzu sei zunächst auf die Fig. 4a und 4b verwiesen.

Davon zeigt Fig. 4a eine schematische Querschnittsansicht des Doppelkupplungsgetriebes 7 der Schaltgetriebeanordnung 3 bei großen Achsabstand dₗ, und zeigt Fig. 4b eine schematische Querschnittsansicht des Schaltgetriebes der Schaltgetriebeanordnung 3 bei kleinem Achsabstand dₛ. Da in den Fig. 4a und 4b bereits anhand von Fig. 1 erläuterte Komponenten gezeigt sind, wird zur Vermeidung von Wiederholungen ausschließlich auf im Zusammenhang mit dem Achsabstand d interessierende Aspekte eingegangen.

Wie der Darstellung der Fig. 4a zu entnehmen, sind die zueinander koaxialen Wellen 70, 72 einerseits mit einem Achsabstand d₁ von den Wellen 51, 53 beabstandet, und andererseits mit einem Achsabstand d₄ von den Wellen 61, 63 beabstandet, so dass das Zahnrad z71 zugleich mit dem Zahnrad z41 und dem Zahnrad z51 kämmt. Die Wellen 51, 53 sind mit einem Achsabstand d₂ von der Abtriebswelle 73 beabstandet. Die Wellen 61, 63 sind mit einem Achsabstand d₃ von der Abtriebswelle 73 beabstandet. Im gezeigten Fall ergibt sich mit den Achsabständen d₁, d₂, d₃, d₄ ein großer Achsabstand dₗ zwischen Welle 70 (bzw. 72) und Abtriebswelle 73.

Fig. 4b zeigt im Unterschied dazu die Möglichkeit, die Welle 70 (bzw. 72) bezogen auf die Abtriebswelle 73 mit einem dazu vergleichsweise kleinen Achsabstand dₛ anzuordnen, wobei die Achsabstände d₁, d₂, d₃, d₄ zwischen den vier Wellenzentren unverändert geblieben sind. Wie der Fig. 4b im Vergleich zur Fig. 4a zu entnehmen, wird der kleinere Abstand dₛ zwischen Welle 70 (bzw. 72) und Abtriebswelle 73 dadurch erreicht, dass gemäß Fig. 4b die Wellen 51, 53 von den Wellen 61, 63 weiter voneinander beabstandet angeordnet sind als gemäß dem in Fig. 4a gezeigten Fall.

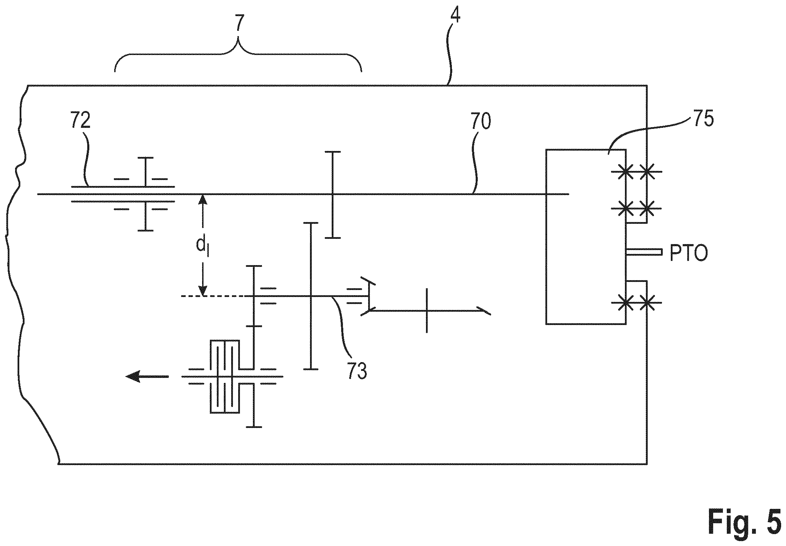

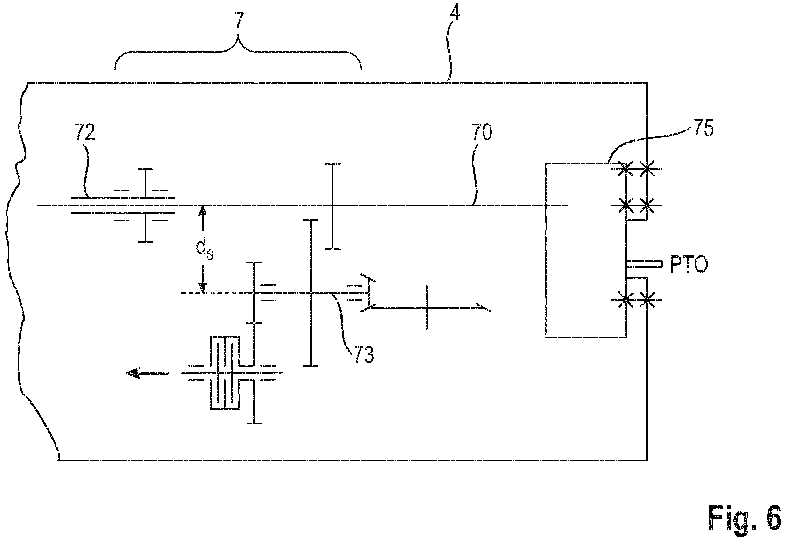

Die Schaltgetriebeanordnung 3 lässt sich demnach vorteilhaft an unterschiedliche Einbaubedingungen anpassen. Dies lässt sich konstruktiv vorteilhaft umsetzen durch ein entsprechend gestaltetes Getriebegehäuse 4, welches zumindest das Doppelkupplungsgetriebe 7, vorteilhaft die gesamte Schaltgetriebeanordnung 3 aufnimmt. Dazu sei auf die Darstellungen der Fig. 5 und 6 verwiesen, welche in stark vereinfachter Seitenansicht das Doppelkupplungsgetriebe 7 der Getriebeanordnung 3 und ein über die Welle 70 antreibbares Zapfwellengetriebe 75 bei großem Achsabstand dₗ (Fig. 5) und bei kleinem Achsabstand dₛ (Fig. 6) zeigen. In dem Getriebegehäuse 4 lässt sich die Welle 70 mit zwei unterschiedlichen Achsabstandsmaßen dₗ, dₛ gegenüber der Abtriebswelle 73 anordnen. Wie mit Bezug zu den Fig. 4a und 4b erläutert, bleibt dabei ein Achsabstand d₁, d₄ jeder der Getriebewellen 53, 63 gegenüber der Welle 70 (bzw. 72) und ein Achsabstand d₂, d₃ jeder der Getriebewellen 53, 63 gegenüber der Abtriebswelle 73 jeweils unverändert, so dass die Funktionsweise der Schaltgetriebeanordnung 3 nicht beeinträchtigt ist.

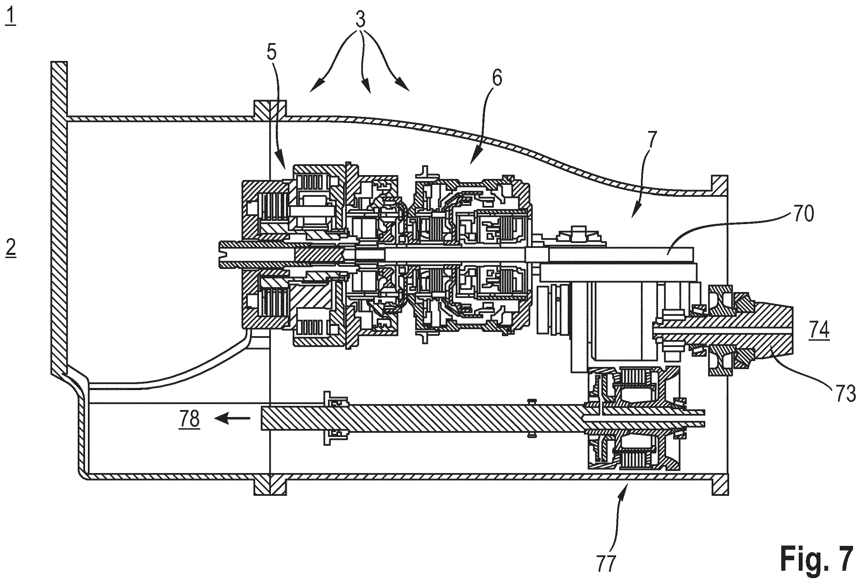

Schließlich zeigt Fig. 7 eine vereinfachte Darstellung eines Ausschnitts eines landwirtschaftlichen Fahrzeugs 1 (z.B. Traktor) mit eingebauter Schaltgetriebeanordnung 3 in schematischer Seitenansicht. Es handelt sich bei der Schaltgetriebeanordnung 3 um eine wie zuvor anhand des bevorzugten Ausführungsbeispiels beschriebene Schaltgetriebeanordnung 3. Der Traktor 1 (nur durch Bezugszeichen angedeutet) verfügt über einen Antriebsmotor 2 (ebenfalls nur durch Bezugszeichen angedeutet) und über ebendiese Schaltgetriebeanordnung 3. Die Schaltgetriebeanordnung 3 ist vom Antriebsmotor 2 antreibbar und steht abtriebsseitig über die Abtriebswelle 73 mit einer Hinterachse 74 des Traktors 1 in Antriebsverbindung, so dass eine Antriebsleistung des Antriebsmotors 2 in eine Fahrbewegung (vorwärts oder rückwärts gerichtet, je nach Schaltzustand des Power Reversers 5) des Traktors 1 umsetzbar ist. Die Abtriebswelle 73 ist daneben über eine Allradkupplung 77 mit einer Vorderachse 78 des Traktors in Antriebsverbindung bringbar.

Die beschriebene Schaltgetriebeanordnung weist verschiedene bereits erläuterte Vorteile auf. Insbesondere wird durch Kombination eines in sieben Lastschaltstufen schaltbaren Lastschaltgetriebes mit einem in vier Gruppenschaltstufen schaltbaren Doppelkupplungsgetriebes die Anzahl erforderlicher Schaltvorgänge bei einem sogenannten Gruppenwechsel verringert. Aufgrund der verhältnismäßig geringen axialen Baulänge des in Planetenbauweise ausgeführten Power Reversers lässt sich eine insgesamt verhältnismäßig kurze Baulänge der Schaltgetriebeanordnung erzielen. Die Architektur insbesondere des Doppelkupplungsgetriebes ermöglicht weiterhin einen variablen Achsabstand zwischen einer zentralen Getriebedurchgangswelle (Zapfwellenantriebswelle) und der Getriebeabtriebswelle.

### Bezugszeichenliste

- 1: Traktor
- 2: Antriebsmotor
- 3: Schaltgetriebeanordnung
- 4: Getriebegehäuse
- 5: Power Reverser
- 6: Mehrstufengetriebe
- 7: Doppelkupplungsgetriebe
- 8: Motorabtriebswelle
- 9: Zwischengetriebe

- 10: erster Planetenradsatz
- 11: Bremse
- 12: Kupplung

- 20: zweiter Planetenradsatz
- 21: Bremse
- 22: Kupplung

- 30: dritter Planetenradsatz
- 31: Bremse
- 32: Kupplung

- 40: Kupplung
- 41: Bremse
- 42: Planetenträger
- 43: Außenring
- 44: Planetenrad
- 45: Planetenrad
- 46: Sonnenrad
- 50: erstes Teilgetriebe
- 51: erste Antriebswelle
- 52: Lamellenkupplung
- 53: erste Getriebewelle
- 54: Schaltmuffe

- 60: zweites Teilgetriebe
- 61: zweite Antriebswelle
- 62: Lamellenkupplung
- 63: zweite Getriebewelle
- 64: Schaltmuffe

- 70: Welle
- 71: Hohlwelle
- 72: Hohlwelle
- 73: Abtriebswelle
- 74: Hinterachse
- 75: Zapfwellengetriebe
- 76: Hohlwelle
- 77: Allradkupplung
- 78: Vorderachse

- dₗ: großer Achsabstand
- dₛ: kleiner Achsabstand
- d₁: Achsabstand
- d₂: Achsabstand
- d₃: Achsabstand
- d₄: Achsabstand
- i: Übersetzung
- Gₙ: Gruppenschaltstufe
- Lₙ: Lastschaltstufe

- z41: Zahnrad
- z42: Zahnrad
- z43: Zahnrad

- z51: Zahnrad
- z52: Zahnrad
- z53: Zahnrad

- z71: Zahnrad

- z81: Zahnrad
- z82: Zahnrad

- z91: Zahnrad

## Patentansprüche

1. Schaltgetriebeanordnung (3) für ein landwirtschaftliches Fahrzeug, insbesondere für einen Traktor (1), umfassend ein aus drei Planetenradsätzen (10, 20, 30) sowie diesen zugeordneten Kupplungsanordnungen (11, 12; 21, 22; 31, 32) gebildetes Mehrstufengetriebe (6), das sich durch selektives Betätigen der Kupplungsanordnungen (11, 12; 21, 22; 31, 32) in zumindest sieben Lastschaltstufen (L_{1..7}) schalten lässt, und ein mit dem Mehrstufengetriebe (6) antriebsverbundenes Schaltgetriebe (7), das in eine Anzahl von Gruppenschaltstufen (Gₙ) schaltbar ist, so dass zwischen einem Ausgang (73) und einem Eingang (8) der Schaltgetriebeanordnung (3) abhängig von einer gewählten Lastschaltstufe (L_{1..7}) und einer gewählten Gruppenschaltstufe (Gₙ) eine Anzahl von Übersetzungen (i) einstellbar ist,
wobei jede Kupplungsanordnung (11, 12; 21, 22; 31, 32) jeweils aus einer Paarung von einer Kupplung (12, 22, 32) und einer Bremse (11, 21, 31) gebildet ist, und dass mit den Gruppenschaltstufen (Gₙ) des Schaltgetriebes (7) derartige Übersetzungen (i_{A..D}) zwischen dem Ausgang (73) der Schaltgetriebeanordnung (3) und einer die Getriebe (6, 7) verbindenden Welle (72) herstellbar sind, dass zum Einstellen einer nächsttieferen oder einer nächsthöheren Übersetzung (i) der Schaltgetriebeanordnung (3) im Mehrstufengetriebe (6) höchstens zwei der Kupplungsanordnungen (11, 12; 21, 22; 31, 32) zu betätigen sind.

2. Schaltgetriebeanordnung nach Anspruch 1, **dadurch gekennzeichnet, dass** es sich bei dem Schaltgetriebe um ein Doppelkupplungsgetriebe (7) handelt, das in insbesondere vier Gruppenschaltstufen (G_{A..D}) unterschiedlicher Übersetzung (i_{A..D}) schaltbar ist.

3. Schaltgetriebeanordnung nach Anspruch 2, **dadurch gekennzeichnet, dass** das Doppelkupplungsgetriebe (7) ein erstes Teilgetriebe (50), dem eine erste Getriebewelle (53) zugeordnet ist, und ein zweites Teilgetriebe (60) aufweist, dem eine von der ersten Getriebewelle (53) beabstandete zweite Getriebewelle (63) zugeordnet ist, wobei jede der Getriebewellen (53, 63) mit einer gemeinsamen Abtriebswelle (73) in Antriebsverbindung bringbar ist und wobei jede der Getriebewellen (53; 63) durch Schließen einer dem jeweiligen Teilgetriebe (50; 60) zugeordneten Reibkupplung (52; 62) mit einer Eingangswelle (72) des Doppelkupplungsgetriebes (7) in Antriebsverbindung bringbar ist.

4. Schaltgetriebeanordnung nach Anspruch 3, **dadurch gekennzeichnet, dass** die erste Getriebewelle (53) mittels der dem ersten Teilgetriebe (50) zugeordneten Reibkupplung (52) mit einer ersten Antriebswelle (51) kuppelbar ist und die zweite Getriebewelle (63) mittels der dem zweiten Teilgetriebe (60) zugeordneten Reibkupplung (62) mit einer zweiten Antriebswelle (61) kuppelbar ist, wobei die erste und die zweite Antriebswelle (51, 61) Teil eines von der Eingangswelle (72) antreibbaren Zwischengetriebes (9) sind.

5. Schaltgetriebeanordnung nach Anspruch 4, **dadurch gekennzeichnet, dass** es sich bei dem Zwischengetriebe (9) um ein Stirnradgetriebe handelt, das eine erste Welle (51) und eine dazu parallele zweite Welle (61) bei insbesondere gleichem Drehsinn der Wellen (51, 61) in ein festes Drehzahlverhältnis zueinander setzt, das bevorzugt ungleich 1 ist.

6. Schaltgetriebeanordnung nach einem der Ansprüche 3 bis 5, **dadurch gekennzeichnet, dass** der ersten und der zweiten Getriebewelle (53; 63) jeweils insbesondere zwei Zahnräder (z42, z43; z52, z53) zugeordnet sind, die jeweils mit einem der Abtriebswelle (73) zugeordneten Zahnrad (z81, z82) kämmen, so dass zwischen der Abtriebswelle (73) und der jeweiligen Getriebewelle (53; 63) jeweils zumindest ein festes Drehzahlverhältnis herstellbar ist.

7. Schaltgetriebeanordnung nach einem der Ansprüche 3 bis 6, **dadurch gekennzeichnet, dass** die Eingangswelle (72) des Doppelkupplungsgetriebes (7) mit der gemeinsamen Abtriebswelle (73) über jedes der beiden Teilgetriebe (50, 60) über jeweils zwei schaltbare Gruppenschaltstufen (G_{B, D}; G_{A, C}) in Antriebsverbindung bringbar ist, so dass das Doppelkupplungsgetriebe (7) in insgesamt vier Gruppenschaltstufen (G_{A, B, C, D}) schaltbar ist.

8. Schaltgetriebeanordnung nach einem der Ansprüche 3 bis 7, **dadurch gekennzeichnet, dass** sich das Doppelkupplungsgetriebe (7) unter Last schalten lässt, indem während des Öffnens der Reibkupplung (52; 62) eines Teilgetriebes (50; 60) die jeweils dem anderen Teilgetriebe (60; 50) zugeordnete Reibkupplung (62; 52) geschlossen wird, so dass eine über eines der Teilgetriebe (50; 60) bestehende Antriebsverbindung zwischen Eingangswelle (72) und Abtriebswelle (73) durch eine über das jeweils andere Teilgetriebe (60; 50) herzustellende Antriebsverbindung ersetzbar ist, ohne eine Antriebsverbindung zwischen Eingangswelle (72) und Abtriebswelle (73) zu unterbrechen.

9. Schaltgetriebeanordnung nach einem der Ansprüche 6 bis 8, **dadurch gekennzeichnet, dass** zur Vorwahl einer Gruppenschaltstufe (Gₙ) das betreffende Zahnrad (z42, z43; z52, z53) durch Stellmittel (54, 64) drehfest mit der jeweiligen Getriebewelle (53; 63) verbindbar ist.

10. Schaltgetriebeanordnung nach einem der vorigen Ansprüche, **dadurch gekennzeichnet, dass** die Schaltgetriebeanordnung (3) eine Wellendurchführung für einen Zapfwellenantrieb (75) des landwirtschaftlichen Fahrzeugs (1) aufweist, indem eine Eingangswelle (71) des Mehrstufengetriebes (6) und eine Eingangswelle (72) des Schaltgetriebes (7) als Hohlwelle ausgeführt sind und eine Welle (70) zum Antrieb eines Zapfwellengetriebes (75) in sich aufnehmen.

11. Schaltgetriebeanordnung nach einem der vorigen Ansprüche, **gekennzeichnet durch** ein zumindest das Schaltgetriebe (7) aufnehmendes Getriebegehäuse (4), in dem sich die Welle (70) zum Antrieb des Zapfwellengetriebes (75), die insbesondere koaxial zur Eingangswelle (72) des Schaltgetriebes (7) angeordnet ist, mit zumindest zwei unterschiedlichen Achsabstandsmaßen (dₗ, dₛ) gegenüber der Abtriebswelle (73) anordnen lässt, wobei ein Achsabstand (d₁, d₄) jeder der Getriebewellen (53, 63) gegenüber der Welle (70, 72) und ein Achsabstand (d₂, d₃) jeder der Getriebewellen (53, 63) gegenüber der Abtriebswelle (73) jeweils unverändert bleibt.

12. Schaltgetriebeanordnung nach einem der vorigen Ansprüche, **dadurch gekennzeichnet, dass** der Schaltgetriebeanordnung (3) eine durch eine Kupplungsanordnung (40, 41) betätigbare Reversiereinrichtung (5) zugeordnet ist, mit der sich eine Drehrichtung zumindest des Abtriebs (73) der Getriebeanordnung (3) umkehren lässt.

13. Schaltgetriebeanordnung nach Anspruch 12, **dadurch gekennzeichnet, dass** die Reversiereinrichtung (5) in Planetenbauweise ausgeführt und koaxial zu einer Eingangswelle (8) der Getriebeanordnung (3), insbesondere eingangsseitig des Mehrstufengetriebes (6) angeordnet ist.

14. Schaltgetriebeanordnung nach einem der vorigen Ansprüche, **dadurch gekennzeichnet, dass** bei einem Schaltvorgang in eine nächsttiefere bzw. nächsthöhere Übersetzung (i) der Schaltgetriebeanordnung (3), der einen Wechsel zwischen der ersten Gruppenschaltstufe (G_{A}) und der zweiten Gruppenschaltstufe (G_{B}) und/oder einen Wechsel zwischen der dritten Gruppenschaltstufe (G_{C}) und der vierten Gruppenschaltstufe (G_{D}) erfordert, im Mehrstufengetriebe (6) lediglich eine einzige der Kupplungsanordnungen (11, 12; 21, 22; 31, 32) zu betätigen ist.

15. Schaltgetriebeanordnung nach einem der vorigen Ansprüche, **dadurch gekennzeichnet, dass** ausschließlich bei einem Schaltvorgang in eine nächsttiefere bzw. nächsthöhere Übersetzung (i) der Schaltgetriebeanordnung (3), der einen Wechsel zwischen der zweiten Gruppenschaltstufe (G_{B}) und der dritten Gruppenschaltstufe (G_{C}) erfordert, im Mehrstufengetriebe (6) zwei der Kupplungsanordnungen (11, 12; 21, 22; 31, 32) zu betätigen sind.

16. Schaltgetriebeanordnung nach einem der vorigen Ansprüche, **dadurch gekennzeichnet, dass** die Lastschaltstufen (L_{1..7}) des Mehrstufengetriebes und die Gruppenschaltstufen (Gₙ) des Schaltgetriebes (7) so abgestimmt sind, dass bei einem Schaltvorgang in eine nächsttiefere bzw. nächsthöhere Übersetzung (i) der Schaltgetriebeanordnung (3) eine Drehzahl am Abtrieb (73) der Getriebeanordnung (3) um einen annähernd gleichbleibenden Faktor ansteigt bzw. abfällt.

17. Landwirtschaftliches Fahrzeug, insbesondere Traktor (1), mit einem Antriebsmotor (2) und einer Schaltgetriebeanordnung (3) gemäß einem der vorigen Ansprüche, wobei die Schaltgetriebeanordnung (3) vom Antriebsmotor (2) antreibbar ist und mit zumindest einer Fahrachse (74) des Fahrzeugs (1) in Antriebsverbindung steht und/oder mit einer Fahrachse (78) in Antriebsverbindung bringbar ist.

## Claims

1. A gearbox assembly (3) for an agricultural vehicle, in particular for a tractor (1), comprising a multi-speed transmission (6) formed by three planetary gear sets (10, 20, 30) as well as their associated clutch assemblies (11, 12; 21, 22; 31, 32), which can be used to shift into at least seven power shift stages (L_{1...7}) by selective actuation of the clutch assemblies (11, 12; 21, 22; 31, 32), and a gearbox (7) which is drive-connected to the multi-speed transmission (6), which can be shifted into a number of group shift stages (Gₙ), so that a number of gears (i) can be selected between an output (73) and an input (8) of the gearbox assembly (3) as a function of a selected power shift stage (L_{1...7}) and a selected group shift stage (Gₙ), wherein
each clutch assembly (11, 12; 21, 22; 31, 32) is respectively formed by a pairing of a clutch (12, 22, 32) and a brake (11, 21, 31), and in that gear ratios (i_{A, D}) between the output (73) of the gearbox assembly (3) and a shaft (72) connecting the transmission (6, 7) can be produced with the group shift stages (Gₙ) of the gearbox (7), in a manner such that, in order to select a next lower or a next higher gear (i) of the gearbox assembly (3) in the multi-speed transmission (6), at most two of the clutch assemblies (11, 12; 21, 22; 31, 32) have to be actuated.

2. The gearbox assembly as claimed in claim 1, **characterized in that** the gearbox is a dual clutch transmission (7) which in particular can be shifted into four group shift stages (G_{A...D}) of different gear ratios (i_{A, D}).

3. The gearbox assembly as claimed in claim 2, **characterized in that** the dual clutch transmission (7) comprises a first sub transmission (50), with which a first gear shaft (53) is associated, and a second sub transmission (60), with which a second gear shaft (63) which is separated from the first gear shaft (53) is associated, wherein each of the gear shafts (53, 63) can be brought into drive connection with a common output shaft (73) and wherein each of the gear shafts (53; 63) can be brought into drive connection with an input shaft (72) of the dual clutch transmission (7) by engaging a friction clutch (52; 62) associated with the respective sub transmission (50, 60).

4. The gearbox assembly as claimed in claim 3, **characterized in that** the first gear shaft (53) can be coupled to a first drive shaft (51) by means of the friction clutch (52) associated with the first sub transmission (50) and the second gear shaft (63) can be coupled to a second drive shaft (61) by means of the friction clutch (62) associated with the second sub transmission (60), wherein the first and the second drive shafts (51, 61) are part of an intermediate gear (9) which can be driven from the input shaft (72).

5. The gearbox assembly as claimed in claim 4, **characterized in that** the intermediate gear (9) is a spur gear which sets a first shaft (51) and a second shaft (61) which is parallel thereto, in particular when the shafts (51, 61) are rotating in the same direction, into a fixed speed ratio with respect to each other which is preferably not equal to 1.

6. The gearbox assembly as claimed in one of claims 3 to 5, **characterized in that** two gear wheels (z42, z43; z52, z53) in particular are respectively associated with the first and the second gear shafts (53; 63), which respectively mesh together with a gear wheel (z81, z82) associated with the take-off shaft (73), so that at least one fixed speed ratio can respectively be produced between the take-off shaft (73) and the respective gear shaft (53; 63).

7. The gearbox assembly as claimed in one of claims 3 to 6, **characterized in that** the input shaft (72) of the dual clutch transmission (7) can be brought into drive connection with the common take-off shaft (73) via each of the two sub transmissions (50, 60) respectively via two shiftable group shift stages (G_{B,D}; G_{A,C}), so that the dual clutch transmission (7) can be shifted into a total of four group shift stages (G_{A,B,C,D}).

8. The gearbox assembly as claimed in one of claims 3 to 7, **characterized in that** the dual clutch transmission (7) can be shifted under power wherein, during disengagement of the friction clutch (52; 62) of a sub transmission (50; 60), the friction clutch (62; 52) associated with the respective other sub transmission (60; 50) is engaged so that a drive connection between the input shaft (72) and take-off shaft (73) via one of the sub transmissions (50; 60) can be replaced by a drive connection to be produced via the respective other sub transmission (60; 50) without interrupting a drive connection between the input shaft (72) and take-off shaft (73).

9. The gearbox assembly as claimed in one of claims 6 to 8 **characterized in that**, in order to preselect a group shift stage (Gₙ), the relevant gear wheel (z42, z43; z52, z53) can be connected to the respective gear shaft (53; 63) in a non-rotational manner by means of positioning means (54, 64).

10. The gearbox assembly as claimed in one of the preceding claims, **characterized in that** the gearbox assembly (3) comprises a shaft feed-through for a power take-off (75) of the agricultural vehicle (1), in which an input shaft (71) of the multi-speed transmission (6) and an input shaft (72) of the gearbox (7) is configured as a hollow shaft and accommodates a shaft (70) for driving a power take-off transmission (75) inside it.

11. The gearbox assembly as claimed in one of the preceding claims, **characterized by** a gearbox housing (4) accommodating at least the gearbox (7), in which the shaft (70) for driving the power take-off transmission (75), which in particular is disposed coaxially with the input shaft (72) of the gearbox (7), can be disposed with at least two different axial separations (d_{I}, d_{S}) with respect to the take-off shaft (73), wherein one axial separation (d₁, d₄) of each of the gear shafts (53, 63) with respect to the shaft (70, 72) and one axial separation (d₂, d₃) of each of the gear shafts (53, 63) with respect to the take-off shaft (73) respectively remains unchanged.

12. The gearbox assembly as claimed in one of the preceding claims, **characterized in that** a reversing device (5) which can be actuated by a clutch assembly (40, 41) is associated with the gearbox assembly (3), with which a direction of rotation of at least the take-off (73) of the gearbox assembly (3) can be reversed.

13. The gearbox assembly as claimed in claim 12, **characterized in that** the reversing device (5) is planetary in construction and is disposed coaxially with an input shaft (8) of the gearbox assembly (3), in particular on the input side of the multi-speed transmission (6).

14. The gearbox assembly as claimed in one of the preceding claims, **characterized in that** only one of the clutch assemblies (11, 12; 21, 22; 31, 32) in the multi-speed transmission (6) has to be actuated during a gear change into a next lower or next higher gear (i) of the gearbox assembly (3) which requires a change between the first group shift stage (G_{A}) and the second group shift stage (G_{B}) and/or a change between the third group shift stage (Gc) and the fourth group shift stage (G_{D}).

15. The gearbox assembly as claimed in one of the preceding claims, **characterized in that** two of the clutch assemblies (11, 12; 21, 22; 31, 32) have to be actuated in the multi-speed transmission (6) exclusively during a gear change into a next lower or next higher gear (i) of the gearbox assembly (3) which requires a change between the second group shift stage (G_{B}) and the third group shift stage (G_{C}).

16. The gearbox assembly as claimed in one of the preceding claims, **characterized in that** the power shift stages (L_{1...7}) of the multi-speed transmission and the group shift stages (Gₙ) of the gearbox (7) are coordinated in a manner such that during a gear change into a next lower or next higher gear (i) of the gearbox assembly (3), a rotational speed at the take-off (73) of the gearbox assembly (3) rises or falls by an approximately constant factor.

17. An agricultural vehicle, in particular a tractor (1), with a propulsion engine (2) and a gearbox assembly (3) as claimed in one of the preceding claims, wherein the gearbox assembly (3) can be driven from the propulsion engine (2) and is in drive connection with at least one drive axle (74) of the vehicle (1) and/or can be brought into drive connection with a drive axle (78).

## Revendications

1. Agencement de transmission (3) pour un véhicule agricole, en particulier pour un tracteur (1) comprenant une boîte de vitesses multi-étagée (6) qui est formée de trois trains planétaires (10, 20, 30) ainsi que d'agencements d'accouplement (11, 12 ; 21, 22 ; 31, 32) associés à ceux-ci et qui peut être commutée par un actionnement sélectif des agencements d'accouplement (11, 12 ; 21, 22 ; 31, 32) selon au moins sept rapports sous couple (L_{1..7}), et une transmission (7), laquelle est en liaison d'entraînement avec la boîte de vitesses multi-étagée (6) et peut être commutée selon un nombre de rapports de groupe (Gₙ), de sorte qu'entre une sortie (73) et une entrée (8) de l'agencement de transmission (3) un nombre de rapports de transmission (i) soit instauré en fonction d'un rapport sous couple sélectionné (L_{1..7}) et d'un rapport de groupe (Gₙ), chaque agencement d'accouplement (11, 12 ; 21, 22 ; 31, 32) étant formé respectivement d'un appariement d'un accouplement (12, 22, 32) et d'un frein (11, 21, 31), et les rapports de groupe (Gₙ) de la transmission (7) permettant d'instaurer des rapports de multiplication (i_{A..D}) entre la sortie (73) de l'agencement de transmission (3) et un arbre (72) reliant les transmissions (6, 7), de façon que, pour instaurer un rapport de multiplication immédiatement inférieur ou immédiatement supérieur (i) de l'agencement de transmission (3) dans la boîte de vitesses multi-étagée (6), au maximum deux des agencements d'accouplement (11, 12 ; 21, 22 ; 31, 32) doivent être actionnés.

2. Agencement de transmission selon la revendication 1, **caractérisé en ce que** la transmission est constituée par une transmission à double embrayage (7) qui peut être commutée selon, en particulier, quatre rapports de groupe (G_{A..D}) de rapport de multiplication (i_{A..D}) différent.

3. Agencement de transmission selon la revendication 2, **caractérisé en ce que** la transmission à double embrayage (7) comporte une première transmission partielle (50), à laquelle est associé un premier arbre de transmission (53), et une seconde transmission partielle (60) à laquelle est associé un second arbre de transmission (63) distant du premier arbre de transmission (53), chacun des arbres de transmission (53, 63) pouvant être amené en liaison d'entraînement avec un arbre mené commun (73), et chacun des arbres de transmission (53 ; 63) pouvant être amené en liaison d'entraînement avec un arbre d'entrée (72) de la transmission à double embrayage (7) par la fermeture d'un embrayage à friction (52 ; 62) associé à la transmission partielle correspondante (50 ; 60).

4. Agencement de transmission selon la revendication 3, **caractérisé en ce que** le premier arbre de transmission (53) peut être couplé à un premier arbre menant (51) au moyen de l'embrayage à friction (52) associé à la première transmission partielle (50), et le second arbre de transmission (63) peut être couplé à un second arbre menant (61) au moyen de l'embrayage à friction (62) associé à la seconde transmission partielle (60), le premier et le second arbre d'entraînement (51, 61) faisant partie d'une transmission intermédiaire (9) entraînable par l'arbre d'entrée (72).

5. Agencement de transmission selon la revendication 4, **caractérisé en ce que** la transmission intermédiaire (9) est constituée par un engrenage à roues droites qui place un premier arbre (51) et un second arbre (61) parallèle à celui-ci dans un rapport de vitesse de rotation fixe qui est préférentiellement différent de 1, pour un sens de rotation en particulier identique des arbres (51, 61).

6. Agencement de transmission selon une des revendications 3 à 5, **caractérisé en ce qu'**au premier et au second arbre de transmission (53 ; 63) sont associées respectivement en particulier deux roues dentées (z42, z43 ; z52, z53) qui s'engrènent chacune avec une roue dentée (z81, z82) associée à l'arbre mené (73), de façon à instaurer au moins un rapport de vitesse de rotation fixe entre l'arbre mené (73) et l'arbre de transmission respectif (53 ; 63).

7. Agencement de transmission selon une des revendications 3 à 6, **caractérisé en ce que** l'arbre d'entrée (72) de la transmission à double embrayage (7) peut être amené en liaison d'entraînement avec l'arbre mené commun (73) par l'intermédiaire de chacune des deux transmissions partielles (50, 60) à travers respectivement deux rapports de groupe commutables (G_{B, D} ; G_{A, C}), de sorte que la transmission à double embrayage (7) est commutable selon au total quatre rapports de groupe (G_{A, B, C, D}).

8. Agencement de transmission selon une des revendications 3 à 7, **caractérisé en ce que** la transmission à double embrayage (7) peut être commutée sous charge par le fait que, pendant l'ouverture de l'embrayage à friction (52 ; 62) d'une transmission partielle (50 ; 60), l'embrayage à friction (62 ; 52) associé respectivement à l'autre transmission partielle (60 ; 50) est fermé, de sorte qu'une liaison d'entraînement établie par l'intermédiaire d'une des transmissions partielles (50 ; 60) entre arbre d'entrée (72) et arbre mené (73) est remplaçable par une liaison d'entraînement à établir par l'intermédiaire de l'autre transmission partielle respective (60 ; 50), sans interrompre une liaison d'entraînement entre arbre d'entrée (72) et arbre mené (73) .

9. Agencement de transmission selon une des revendications 6 à 8, **caractérisé en ce que** pour la présélection d'un rapport de groupe (Gₙ), la roue dentée correspondante (z42, z43 ; z52, z53) peut être solidarisée en rotation avec l'arbre de transmission respectif (53 ; 63) par l'intermédiaire de moyens actionneurs (54, 64).

10. Agencement de transmission selon une des revendications précédentes, **caractérisé en ce que** l'agencement de transmission (3) est pourvu d'un passage d'arbre pour une commande de prise de force (75) du véhicule agricole (1) par le fait qu'un arbre d'entrée (71) de la boîte de vitesses multi-étagée (6) et un arbre d'entrée (72) de la transmission (7) sont conformés en arbres creux et reçoivent intérieurement un arbre (70) pour entraîner une transmission de prise de force (75).

11. Agencement de transmission selon une des revendications précédentes, **caractérisé par** un carter de transmission (4) qui reçoit au moins la transmission (7) et dans lequel l'arbre (70) pour l'entraînement de la transmission de prise de force (75), lequel est en particulier disposé coaxialement à l'arbre d'entrée (72) de la transmission (7), peut être disposé avec au moins deux dimensions d'entraxe différentes (d_{I}, d_{S}) par rapport à l'arbre mené (73), un entraxe (d₁, d₄) de chacun des arbres de transmission (53, 63) demeurant inchangé par rapport à l'arbre (70, 72) et un entraxe (d₂, d₃) de chacun des arbres de transmission (53, 63) demeurant inchangé par rapport à l'arbre mené (73).

12. Agencement de transmission selon une des revendications précédentes, **caractérisé en ce qu'**à l'agencement de transmission (3) est associé un dispositif d'inversion (5) qui peut être actionné par l'intermédiaire d'un agencement d'accouplement (40, 41) et qui permet d'inverser un sens de rotation au moins de la partie menée (73) de l'agencement de transmission (3).

13. Agencement de transmission selon la revendication 12, **caractérisé en ce que** le dispositif d'inversion (5) est réalisé en conception planétaire et est disposé coaxialement à un arbre d'entrée (8) de l'agencement de transmission (3), en particulier côté entrée de la boîte de vitesses multi-étagée (6).

14. Agencement de transmission selon une des revendications précédentes, **caractérisé en ce qu'**en cas de commutation vers le rapport de multiplication immédiatement inférieur, respectivement immédiatement supérieur (i) de l'agencement de transmission (3), laquelle exige un passage entre le premier rapport de groupe (G_{A}) et le second rapport de groupe (G_{B}) et/ou un passage entre le troisième rapport de groupe (G_{C}) et le quatrième rapport de groupe (G_{D}), un seul des agencements d'accouplement (11, 12 ; 21, 22 ; 31, 32) peut être actionné dans la boîte de vitesses multi-étagée (6).

15. Agencement de transmission selon une des revendications précédentes, **caractérisé en ce que** seulement en cas de commutation vers un rapport de démultiplication immédiatement inférieur, respectivement immédiatement supérieur (i) de l'agencement de transmission (3), lequel exige un passage entre le second rapport de groupe (G_{B}) et le troisième rapport de groupe (G_{C}), deux des agencements d'accouplement (11, 12 ; 21, 22 ; 31, 32) peuvent être actionnés dans la boîte de vitesses multi-étagée (6).

16. Agencement de transmission selon une des revendications précédentes, **caractérisé en ce que** les rapports sous couple (L_{1..7}) de la boîte de vitesses multi-étagée et les rapports de groupe (Gₙ) de la transmission (7) sont harmonisés de façon qu'en cas de commutation vers un rapport de multiplication immédiatement inférieur, respectivement immédiatement supérieur (i) de l'agencement de transmission (3), une vitesse de rotation au niveau de la partie menée (73) de l'agencement de transmission (3) augmente, respectivement diminue selon un facteur sensiblement constant.

17. Véhicule agricole, en particulier tracteur (1), comprenant un moteur d'entraînement (2) et un agencement de transmission (3) selon une des revendications précédentes, l'agencement de transmission (3) pouvant être entraîné par le moteur d'entraînement (2) et étant en liaison d'entraînement avec au moins un essieu (74) du véhicule (1) et/ou pouvant être amené en liaison d'entraînement avec un essieu (78).
